(19) Europäisches Patentamt

European Patent Office

Office européen des brevets

(11) **EP 1 102 069 B1**

(12) **EUROPEAN PATENT SPECIFICATION**

(45) Date of publication and mention
of the grant of the patent:
**08.09.2004 Bulletin 2004/37**

(51) Int Cl.$^7$: **G01N 35/08**

(21) Application number: **00125145.3**

(22) Date of filing: **17.11.2000**

(54) **Flow injection analyzer and flow injection analysis method**

Fliessinjektionsanalyse-Gerät und Analyseverfahren

Analyseur par injection de flux et méthode d'analyse

(84) Designated Contracting States:
**CH DE FR GB IT LI**

(30) Priority: **19.11.1999 JP 33016599**

(43) Date of publication of application:
**23.05.2001 Bulletin 2001/21**

(73) Proprietor: **NIKKISO CO., LTD.**
**Shibuya-ku Tokyo 150-0013 (JP)**

(72) Inventors:
• **Nakahigashi, Hisakazu,**
**Nikkiso Company Limited**
**Higashimurayama, Tokyo 189-8520 (JP)**
• **Akahori, Yukihiro, Nikkiso Company Limited**
**Haibara-gun, Shizuoka 421-0496 (JP)**

(74) Representative:
**TER MEER STEINMEISTER & PARTNER GbR**
**Patentanwälte,**
**Mauerkircherstrasse 45**
**81679 München (DE)**

(56) References cited:
**US-A- 4 582 687**         **US-A- 5 828 458**

• **PATENT ABSTRACTS OF JAPAN vol. 013, no. 073 (P-830), 20 February 1989 (1989-02-20) -& JP 63 259441 A (HITACHI LTD;OTHERS: 01), 26 October 1988 (1988-10-26)**
• **PATENT ABSTRACTS OF JAPAN vol. 1999, no. 12, 29 October 1999 (1999-10-29) -& JP 11 174061 A (SOMA KOUGAKU:KK), 2 July 1999 (1999-07-02)**
• **PATENT ABSTRACTS OF JAPAN vol. 009, no. 109 (P-355), 14 May 1985 (1985-05-14) -& JP 59 231426 A (SHIMAZU SEISAKUSHO KK), 26 December 1984 (1984-12-26)**

**Description**

BACKGROUND OF THE INVENTION

Field of the Invention

This invention relates to a method of flow injection analyzing and to the use of a flow injection analyzer, more particularly a flow injection analyzer provided with a flow cell for canceling out qualitative errors caused by inherent physical properties of liquid samples, for carrying out the method of the present invention.

Description of Prior Art

The flow injection analyzer is comprised of a thin tube, a liquid feeder for feeding a liquid sample or carrier into the thin tube, a reagent-introducing portion, an operating part of the thin tube in which the liquid sample and the reagent are allowed to react or mix with each other, a detector for detecting the elements which became detectable by the reaction or mixing of the liquid sample and the reagent, and a recorder for recording the data from the detector.

In prior art flow injection analyzers, the quantitative analysis of objective elements was conducted only with the results of detection of the reacted or mixed solution obtained by mixing the reagent to the liquid sample. In these analyzers, if the liquid sample contains impurities detectable by the detector, the results of detection include the amount of the impurities added to the correct results. Thus, there are caused errors in the results of analysis, i.e., a deviation in the measurements, based on the physical amounts of the liquid sample itself. In other words, flow injection analyzers in prior art cannot obtain any exact or precise results of analysis.

In this case, the liquid sample itself is beforehand detected. The errors are canceled out by subtracting this detected value from the detected value of the liquid sample treated with the detecting reagent. Thus, the detection of the liquid sample itself is needed, and it complicates the analysis operation. Further, since the detected value of the liquid sample and the detected value of the liquid sample treated with the reagent cannot simultaneously be obtained, the calculation with the detected values must inconveniently be made later.

The detector is not always stable in its sensitivity. Therefore, the sensitivity may be changed during the analysis to cause errors in detected values.

JP 63-259 441 A discloses in a double beam photometer having a first flow cell an inlet of which is connected with a tube for feeding a liquid sample to the flow cell. The outlet of the first flow cell is connected to the inlet of a second flow cell the outlet of which is connected to a drain.

A joint for introducing a reagent or a liquid sample into the system is connected with a container that contains a reagent or a liquid sample by means of a tube via a pump. Furthermore, light from a light source is splitted by a sector mirror into two parts each of which passes through the first and the second flow cell, respectively. The light passing through the flow cells is detected by means of a single detector that is connected with a corresponding data processor.

JP 11-174 061 A describes a flow injection analyzer having first and second flow cells through which light from a light source is passed and detected by detectors which are connected to a corresponding evaluating circuit. The outlet of the first flow cell is connected with the inlet of the second flow cell by means of respective tubes via a reactor section. A pump for introducing a reagent is connected with the tube between the outlet of the first flow cell and the reactor section for adding a reagent or the like to the liquid flowing through the tube.

JP 58-107 489 A discloses an opto acoustic detector having a xenon flash lamp the light of which is incident into a flow cell. Sound waves generated within a sample in the flow cell are detected by a sound detector, amplified and integrated in a box car integrator. On the reference intensity side light from the xenon flash lamp is incident on a photo diode. The output signal of the photo diode is amplified and supplied to a sample and hold circuit. The output of the sample and hold circuit is used for correcting for the output of the box car integrator by dividing the latter through the former in a divider to obtain a signal corrected in the background such as fluctuation in the light of the xenon flash lamp.

SUMMARY OF THE INVENTION

The object of the invention is to provide a flow injection analyzer method which is free of analysis errors (deviations) based on an unstable activity of an analyzer. Another object is to provide a use of flow injection analyzer for carrying out the flow injection analysis method that provides simple analysis operation and subsequent calculations easy to make.

These objects are accomplished by the analyzing method according to claim 1 and the use according to claim 2.

US 5,828,458 is concerned with a turbidity sensor and discloses a test cell provided with a light source including an LED, first and second photo diodes for detecting light that traverses across the test cell and light that has been scattered by the suspended material in the fluid contained in the test cell, respectively. A third photodiode is positioned to intercept light from the LED of the source outside of the test cell chamber so that the light from the source can be received directly and can be therefore sensed without interference or interaction with the test cell.

The output of the photodiode is amplified and compared with a reference voltage for controlling the driver current of LED so as to keep the output intensity of LED constant.

This arrangement is provided to overcome the influence of changes of the light emission characteristics of the light source to improve the correspondence between the sensor output and the turbidity of a fluid sample.

BRIEF DESCRIPTION OF THE DRAWINGS

Fig. 1 is a flow diagram of an embodiment FIA1 of the flow injection analyzer according to this invention.

Fig. 2 is a graph showing output signals from the first detection site and the second detection site of FIA1 in an example.

Fig. 3 is a flow diagram of another embodiment FIA1a of the flow injection analyzer according to this invention.

Fig. 4 is a flow diagram of another embodiment FIA1b of the flow injection analyzer according to this invention.

Fig. 5 is a flow diagram of an embodiment FIA2 of the flow injection analyzer according to this invention.

Fig. 6 is a graph showing output signals from the first detection site and the second detection site of FIA2 in an example.

DETAILED DESCRIPTION OF PREFERRED EMBODIMENTS OF THIS INVENTION

In accordance with this invention, there are provided:

a flow injection analyzer comprising a first flow cell through which a liquid sample is allowed to pass, a first physical amount measure by which the physical amount of the liquid in the first flow cell is measured, a second flow cell through which the liquid obtained by adding a detecting reagent to the liquid sample, and a second physical amount measure by which the physical amount of the liquid in the second flow cell is measured,

equipped with, in a preferred embodiment of this invention, a computer by which the concentration of the objective element in the liquid sample is calculated from the measurements by the first physical amount measure and the second physical amount measure,

said first physical amount measure being, in a preferred embodiment of this invention, a first light amount measure by which the amount of a light passing through said first flow cell is measured, and said second physical amount measure being a second light amount measure by which the amount of a light passing through said second flow cell is measured, and

further equipped with a detector-regulating means, in a preferred embodiment of this invention, comprising a light amount-regulating cell, a third light amount measure by which the amount of the lights from the light sources of said first light amount measure and said second light amount measure and passing through said light amount-regulating cell is measured, and a regulating site by which the light amount measured by said third light amount measure is regulated to be always constant; and

a flow injection analysis method, which comprises feeding a liquid sample into said first flow cell, measuring the physical amount of the liquid sample in said first flow cell by said first light amount measure, feeding the liquid obtained by adding the detecting reagent to the liquid sample into said second flow cell, measuring the physical amount of the liquid in said second flow cell by the second light amount measure, and analyzing the objective element in said liquid sample from the measurements by said first light amount measure and second light amount measure, and

the light sources of said first and second light amount measures are controled, in a preferred embodiment of this invention, in such a manner that the amount of lights from said light sources and passing through the light amount regulating cell is measured by the third light amount measure, and the resulting measurement is always constant.

The physical amount referred to in this invention may, in principle, include an electric conductivity, pH value, turbidity or etc. as well as the amount of light.

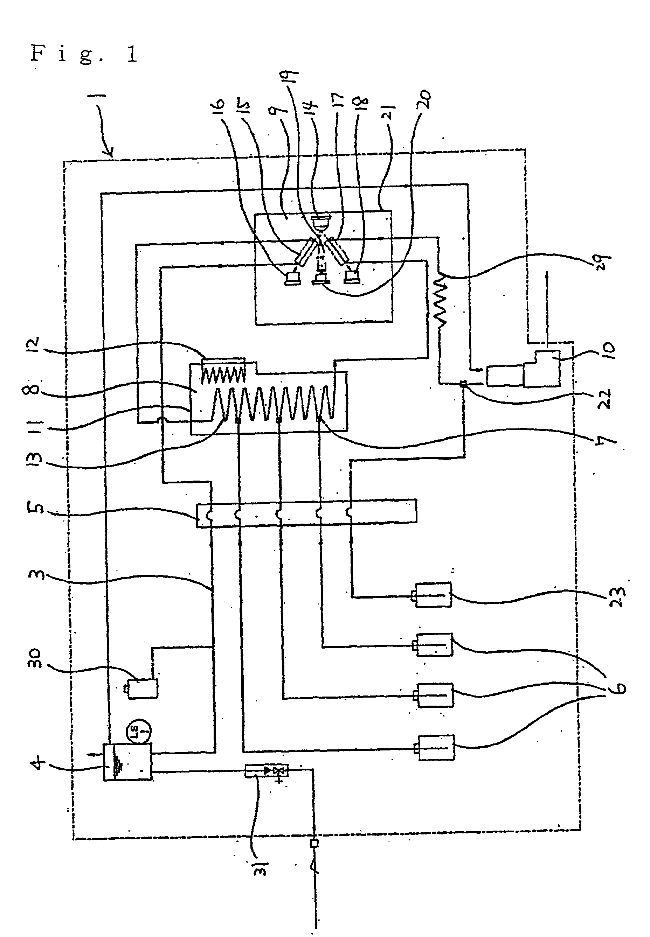

For illustration of the flow injection analysis of this invention, the measurement of the amount of light will be referred to in an example, with reference to the drawings attached hereto. Fig. 1 is a flow diagram of an embodiment FIA1 of the flow injection analyzer according to this invention. The flow injection analyzer FIA1 is a silica analyzer for measuring the silica content in a liquid sample.

FIA1 is comprised of thin tubes 3, a sample container 4, a pump 5, reagent containers 6, reagent-introducing portions 7, a reactor 8, a detecting portion 9, and a liquid-wasting portion 10.

The thin tubes 3 are provided for feeding the liquid sample, detecting liquid, and carrier. The sites constituting FIA1 are connected to each other through said thin tubes 3. The inner diameter of the tubes may range from 0.25 to 1.0mm, and the outer diameter from 1.0 to 2.0mm. The thin tubes may be made of various materials as desired, e.g., chemical-resistant materials or temperature-resistant materials, normally a fluoresin, polyethylene resin or polypropylene resin.

The above-mentioned sample container 4 is connected to the pump 5 through a thin tube, a thin tube for supplementing the liquid sample into sample container 4, and the other thin tube directly connecting to the overflowing liquid-wasting portion 10. Further, the thin tube for supplementing liquid sample is equipped with a flow meter 31. A thin tube connected to a standard liquid container 30 in which a standard liquid for using in preparation of a graph based on the measured values is contained, is connected to the thin tube which extends from the sample container 4 to the pump 5.

The pump 5 may normally be of a plunger type or peristaltic type. The number of pump 5 used may correspond to that of the kinds of the liquid samples to be fed. Further, it may be of a manifold type corresponding to the number. The materials of tubes used for the pump 5 may is selected on depending upon the nature of the liquid to be fed, and they may be PVC, silicone rubber, fluoresins.

The above-mentioned reagent-introducing portions 7 are sites for adding the detecting reagent to the liquid sample flowing through the thin tube. Reagent-introducing portions 7 are constituted by connecting to the three connecting portions of a three-way connector, a thin tube for allowing the liquid sample to flow into said connector, a thin tube for allowing the liquid sample to flow out of said connector, and a thin tube at one end thereof and connecting at the other end thereof to reagent containers 6. The thin tubes connecting at the other end thereof to the reagent containers 6 are equipped in the course thereof with the pump 5. The reagents contained in the reagent containers 6 are fed by the pump 5 into reagent-introducing portions 7. The number of the reagent-introducing portion 7 may correspond to that of the reagent containers. In FIA1, there are formed three reagent-introducing portions.

The detecting reagent is allowed to react with the objective element of the sample to be analyzed, to thereby form a reaction product detectable at detecting portion 9. In FIA1, three kinds of the reagents are used.

The above-mentioned reactor 8 is a site for allowing the liquid sample and the detecting reagents introduced through reagent-introducing portions 7 to react with each other in the thin tube. The reactor 8 is constituted by a reactor vessel 11, a heater 12 for maintaining the inside of the reactor vessel 11 at a constant temperature, and a coiled reaction part 13 of the thin tube. The reagent-introducing portions 7 are provided at the coiled reaction part 13. The liquid sample passing through the thin tube is fed to the coiled reaction part 13. The detecting reagents are added in turn to the liquid sample at reagent-introducing portions 7, thereby carrying out the reactions of the liquid sample with the first reagent, of the resulting reaction product with the second reagent, and of the further reaction product with the third reagent. In order to give a period of reaction time predetermined for each of the reactions, the length of the coiled reaction part 13 and the positions of the reagent-introducing portions are determined. During passing through the coiled reaction part 13 and thin tube, reaction proceeds and the objective element to be analyzed is changed to the detectable component in the detecting portion . A certain period of reaction time is required from the addition of the reagents to the liquid sample in the coiled reaction part 13 until the concentration of the component in the reaction product reaches a given constant level, i.e., an equilibrium state. The period of reaction time depends upon the length of the thin tube and the flow rate of the liquid sample in the thin tube. Thus, if the absorbance mentioned later is measured before the above-mentioned period of reaction time elapse, the exact data cannot be obtained due to the concentration not reaching the constant level. This problem can be solved by not using the data obtained before the above-mentioned period of reaction time elapse, but using the data only obtained after the above-mentioned period of time elapse.

The reaction product is carried through the thin tube. The position at which the reaction product reaches the equilibrium state depends upon the length of the thin tube and the flow rate of the reaction product through the thin tube.

In FIA1, detecting portion 9 is a spectrophotometer, which is constituted by a light source 14, a first flow cell 15, a first light-receiving element 16, a second flow cell 17, a second light-receiving element 18, a light amount-regulating cell 19, a third light-receiving element 20 and a detecting chamber 21. A group of the light source 14, the first flow cell 15 and the first light-receiving element 16 is formed in a first detecting portion. A group of the light source 14, the second flow cell 17 and the second light-receiving element 18 is formed in a second detecting portion. A group of the light source 14, the light amount-regulating cell 19 and the third light-receiving element 20 is formed in a light source-regulating site. That is, the light source 14 is an element common to the first detecting portion, the second detecting portion and the light amount-regulating site. Further, the light source 14 is equipped with a filter through which a light having a specified wavelength is allowed to pass, so that the light having a specified wavelength may emit from the light source. The detecting chamber 21 is a container accommodating the constituents of detecting portion 9.

The first flow cell 15 is a cell through which the liquid sample starting at sample container 4 passes without being allowed to pass through the reagent-introducing portion 7 and the reactor 8. The first light-receiving element 16 is a light-receiving element for detecting the light emitting from the light source 14 and passing through the first flow cell 15. That is, in the first detecting site, a light from the light source 14 is applied to the first flow cell 15 containing the liquid sample flowing therethrough, and the amount of the light passing through the first flow cell 15 is measured by the first light-receiving element 16, thereby asking for the measurements of the components inherently contained in the liquid sample and detectable by the detecting portion 9.

The second flow cell 17 and the second light-receiving element 18 are arranged in the relationship of relative positions with respect to the light source 14 similar to that of the first flow cell 15 and the first light-receiving element 16. The second flow cell 17 and the second light-receiving element 18 have the same specifications as those of the first flow cell 15 and the first light-receiving element 16, respectively. The second flow cell 17 is a cell through which the above-mentioned reaction product is allowed to pass. In FIA1, the liquid sample passing through the first flow cell 15 is fed to the reactor 8, subjected to said reaction and then fed to the second flow cell 17. The second light-receiving element 18 is a light-receiving element for detecting a light emitting from the light source 14 and passing through the second flow cell 17. That is, in the second detecting site, a light from the light source 14 is applied to the second flow cell 17 containing the liquid sample flowing therethrough, and the amount of the light passing through the second flow cell 17 is measured by the second light-receiving element 18, thereby asking for the measurements of the reaction product.

The measurements asked for in the second detecting site is the sum of the measurements of the components inherently contained in the liquid sample and detectable by the detecting portion 9 plus the measurements of the components changed in the reactor 8 to be detectable form by detecting portion 9. Therefore, the effect of components inherently contained in the liquid sample on the measurements is removed by subtracting the measurements obtained in the first detecting site from the measurements obtained in the second detecting site. Thus, the measurements of only the objective elements to be analyzed can be obtained.

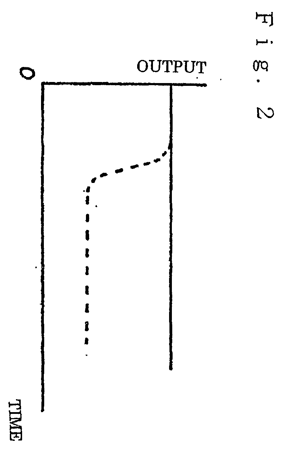

The measurements obtained in the first detecting site and second detecting site can be displayed in a recording device (not shown) connected to the detecting portion 9. The output signals from the first light-receiving element 16 and the second light-receiving element 18 in FIA1 are shown in Fig. 2. The solid line in Fig. 2 shows the output signals for the liquid sample, obtained in the first detecting site, and the dotted line in Fig. 2 shows the output signals for the reaction product, obtained in the second detecting site. The difference in the ordinate direction between both the lines means the output signals based on the objective components to be analyzed, contained in the liquid sample.

Specifically, the objective components to be analyzed, contained in the liquid sample, can be determined with the following equation:

$$C = A \left(1 + (\ln I_0/I_n)/B\right) \times \ln I_0 / I_n + C_0$$

wherein

C:      concentrations of objective components to be analyzed, contained in the liquid sample

$C_0$:    adjustment to zero

$I_0$:    output obtained for the liquid sample in the first detecting site

$I_n$:    output obtained for the reaction product in the second detecting site

A, B:    parameters for the lines of detected amounts

ln:     logarithm to base e

A and B above are constant terms of quadratic functions, which can be obtained by measuring the light absorbance of each of two samples having known concentrations and calculating from the resulting $(\ln I_n/I_0)$ values.

The theoretical equation for the light absorbance is normally represented by a linear function for $(\ln I_n/I_0)$. However, in FIA1, the quadratic function for $(\ln I_n/I_0)$ is used for calculation of the concentrations, because the detector of a simple type is used and is designed to apply to the measuring of low concentrations to high concentrations. In the flow injection analyzer of this invention, the equation for calculation may vary depending upon the kind and nature of the detectors, and the way of using the detectors.

The flow injection analyzer of this invention may be equipped with a computer, by which the outputs obtained in the first and second detecting sites are calculated with the equation mentioned above to automatically obtain the concentration of the objective component in the liquid sample. In this case, in the automatic determination of concentrations by calculation, the difference in the physical amounts of the objective components to be analyzed may firstly be taken, and then converted to the difference in the concentration, or the concentration of the objective component to be analyzed may firstly be calculated from the physical amount thereof, and then the difference in concentration may be obtained.

The light amount-regulating cell 19 is mounted between the first flow cell 15 and the second flow cell 17. The third light-receiving element 20 detects a light emitting from light source 14 and passing through the light amount-regulating cell 19. In FIA1, a regulating means (not shown) regulates the electric current for driving light source 14, so that the light amount detected by the third light-receiving element 20 may be always maintained at a constant level. Thus, the measuring errors based on the change in the amount of light from the light source can be canceled.

The liquid-wasting portion 10 is a means for discharging the reaction product passing the second flow cell 17 to the outside of the system. FIA1 is designed in such a fashion that neutralizing liquid-introducing portion 22 is provided in the course of the thin tube between the second flow cell 17 and the liquid-wasting portion 10, the neutralizing liquid is added to the reaction product in the thin tube at neutralizing liquid-introducing portion 22 to adjust the pH of the reaction product, and then the reaction product is discharged at the liquid-wasting portion. Further, a back-pressure coil 29 of the thin tube is arranged in the course of the thin tube connecting the second flow cell 17 and the neutralizing liquid-introducing portion 22 to each other, thereby raising the pressure of the liquid in the thin tube system to prevent bubbles from being formed in the thin tube system.

The flow injection analysis method of this invention will be illustrated below with reference to the use and function of FIA1.

The pump 5 is worked to feed the liquid sample in the sample container 4 into the thin tube. The liquid sample passes through the pump 5, reaches the detecting portion 9, and passes through the first flow cell 15 in the detecting portion 9. Then, a light from the light source 14 is applied to the first flow cell 15, and the light passing through the first flow cell 15 is detected in the first light-receiving element 16, thereby obtaining the measurement of the liquid sample itself from the first detecting site.

The liquid sample passing through the first flow cell 15 is fed to the reactor 8. The reactor vessel 11 in the reactor 8 is maintained at a predetermined temperature by the heater 12. The liquid sample is allowed to pass through the coiled reaction part 13. Reaction reagents are added in turn through the pump 5 to the liquid sample at reagent-introducing portions 7 provided on the coiled reaction part 13, and then there the reaction is effected to thereby convert the objective components contained in the liquid sample into components detectable in the detecting portion 9. When the liquid sample leaves the reactor 8, the liquid sample has become a reaction product containing the objective components in the liquid sample to be analyzed changed to a detectable form in the detecting portion 9.

The reaction product enters the detecting portion 9 and passes through the second flow cell 17 in the detecting portion 9. Then, the light emitting from the light source 14 is applied to the second flow cell 17. The light from the light source 14 passing through the second flow cell 17 is detected by the second light-receiving element 18, thereby obtaining the measurement of the reaction product from the second detecting site.

The quantitative analysis of the objective component to be analyzed in the liquid sample can be calculated from the measurements obtained in the first detecting site and the measurements obtained in the second detecting site.

The light from the light source 14 is applied to the light amount-regulating cell 19 placed in the detecting portion 9. The light passing through the light amount-regulating cell 19 is always detected by the third light-receiving element 20. The electric current for the driving light source 14 is regulated so that the light amount detected by the third light-receiving element 20 may be always maintained at a constant level. Thus, the analyzer of this invention is free of the measuring errors based on the change in the amount of light from light source 14.

The reaction product passing through the second flow cell 17 is neutralized by adding a neutralizing liquid contained in a neutralizing liquid container 23 through the pump 5 to the reaction product at the neutralizing liquid-introducing portion 22, and then discharged at the liquid-wasting portion 10.

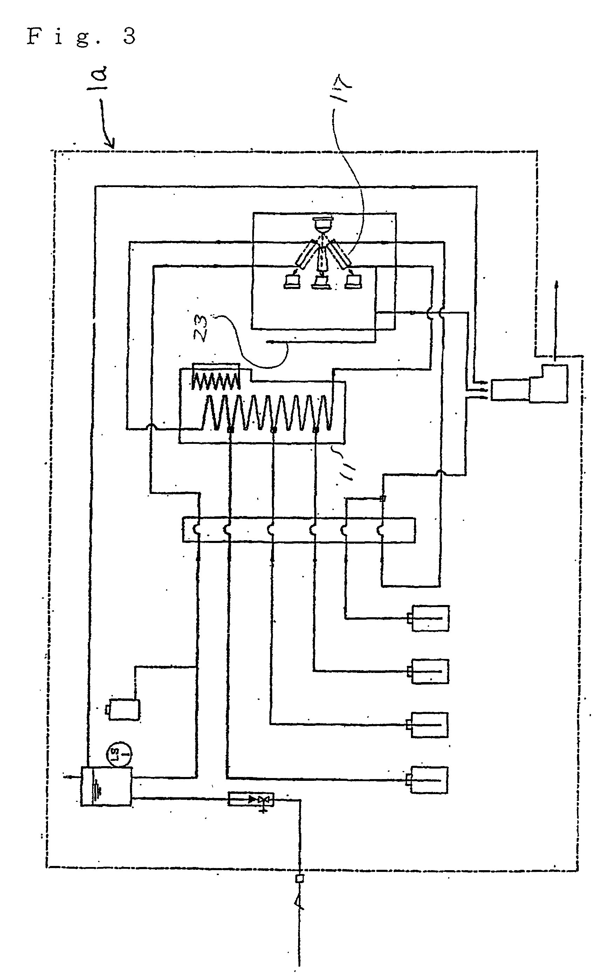

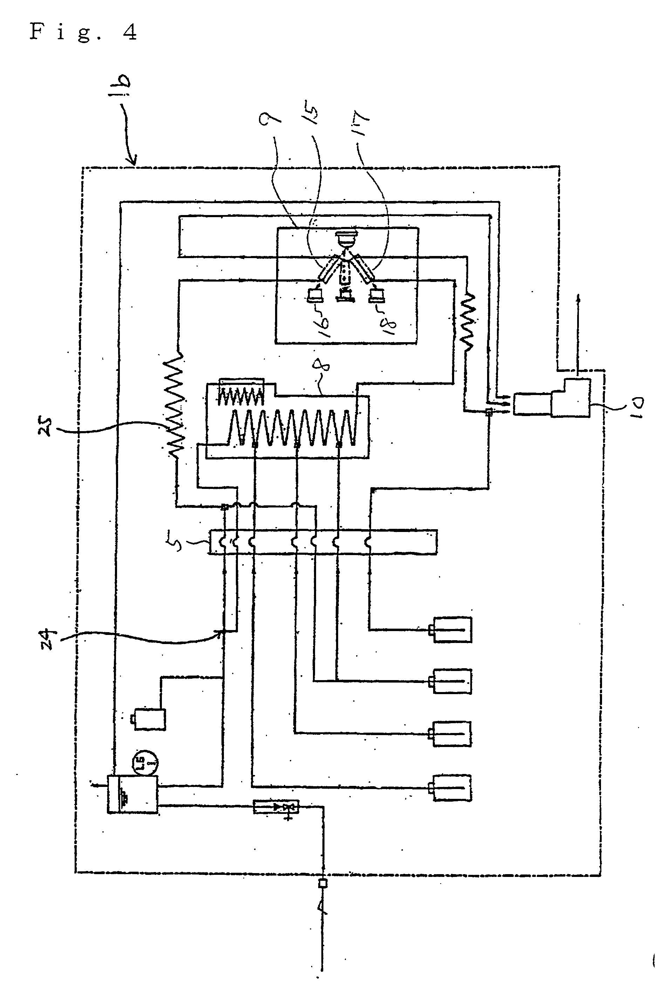

Figs. 3 and 4 show modifications FIA1a and FIA1b of FIA1.

In FIA1a as shown in Fig. 3, the back-pressure coil 29 of FIA1 is removed, and instead a vent 23 branched off from the thin tube is provided between the reactor 11 and the second flow cell 17, thereby allowing bubbles generated in the thin tube to be removed therefrom.

In FIA1b as shown in Fig. 4, a branching point 24 is provided between a sample container 4 and a pump 5, thereby allowing the liquid sample to travel in two ways. The liquid sample through one of the thin tubes branched off at the branching point 24 passes through the pump 5, then a coiled part 25 of the thin tube, and the first flow cell 15 in the detecting portion 9, and then reaches the liquid-wasting portion 10 without passing through the reactor 8. On the other hand, the liquid sample through the other thin tube branched off at the branching point 24 passes through the pump 5, and reaches the reactor 8 without passing through the first flow cell 15. Then, the liquid sample is subjected to the reaction to produce the reaction product, which passes through the second flow cell 17 and then is neutralized and reaches the liquid-wasting portion 10.

The output signals like those as shown in Fig. 2 are also obtained with the first and the second light-receiving elements in FIA1a and FIA1b.

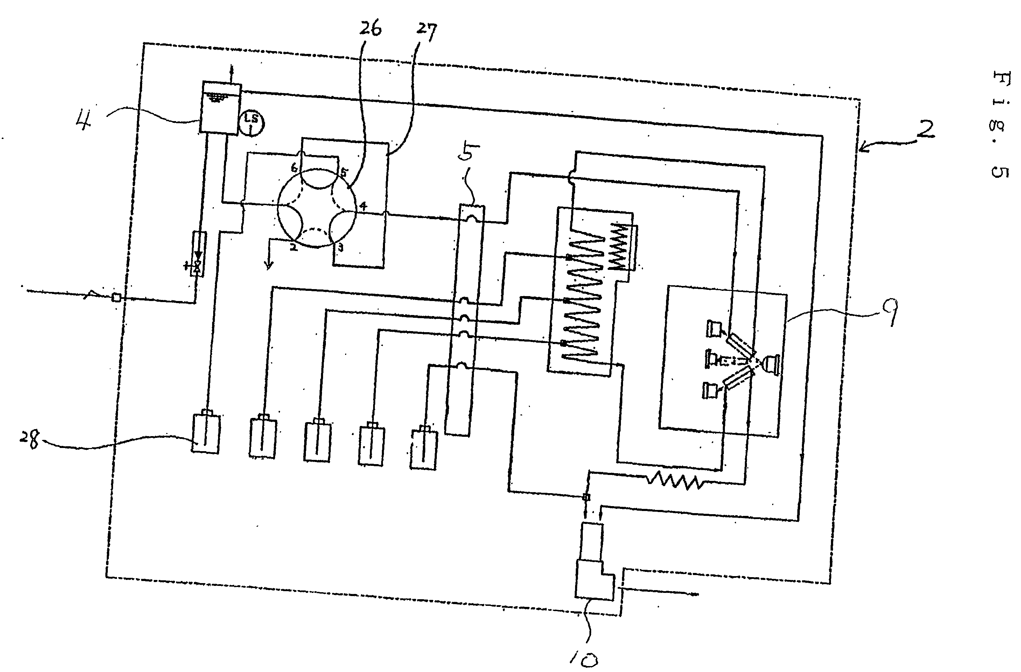

Then, another embodiment of this invention, FIA2, which is different from FIA1, FIA1a and FIA1b, will be illustrated below. The system of FIA2 is shown in Fig. 5.

FIA2 is different from FIA1 in that a switching valve 26 is provided in the thin tube between the sample container 4 and the pump 5 of FIA1, but otherwise, FIA2 is basically identical to the structure with FIA1.

The switching valve 26 is a six-way valve, of which position 1 is connected to the sample container 4, position 2 is provided with a thin tube for drainage, position 3 is provided with a sampling tube 27 connected to position 6, position 4 is provided with a thin tube communicating with the pump 5, and position 5 is a thin tube communicating with a carrier container 28 containing a carrier therein.

Where the sample is not introduced, the switching valve 26 is set in such a manner that the flow path within the switching valve 26 may be in the solid line as shown in Fig. 5. Thus, the carrier leaves the carrier container 28 and then passes through the switching valve 26 in the order of position 5 → position 6 → position 3 → position 4 and the thin tubes connected to these positions, and thereafter passes through the pump 5, the first flow cell 15, the reactor 8 and the second flow cell 17, and finally is discharged via liquid-wasting portion 10.

Where the sample is introduced, the switching valve 26 is switched and set in such a manner that the flow path within the switching valve 26 may be in the dotted line as shown in Fig. 5. Thus, the carrier leaves the carrier container 28 and then passes through the switching valve 26 in the order of position 5 → position 4 and the thin tubes connected to these positions, and thereafter passes in the same manner as mentioned above. On the other hand, the sample leaves sample container 4 and passes through switching valve 26 in the order of position 1 → position 6 →position 3 → position 2 and the thin tubes connected to these positions, and is drained. In this case, therefore, the sampling tube 27 connecting position 3 and position 6 to each other is filled with the sample.

The switching valve 26 is again switched, and is set in such a manner that the flow path within the switching valve 26 may be in the state as shown in the solid line in Fig. 5. Thus, the carrier leaves the carrier container 28 and then passes through the switching valve 26 in the order of position 5 → position 6 →position 3 → position 4 and the thin tubes connected to these positions, and the sample within sampling tube 27 is fed in the direction to detecting portion 9. Accordingly, in FIA2, the procedures as mentioned above are repeated, so that the sample is allowed to intermittently flow through the thin tubes in fractions of the sample, each of which has the same volume as that of sampling tube 27 and is sandwiched between the front and rear carriers.

Each fraction of the sample passes through the first detecting site, the reactor and the second detecting site, in the same manner as in FIA1, in which the measurement of light absorbance is made and the reaction is effected.

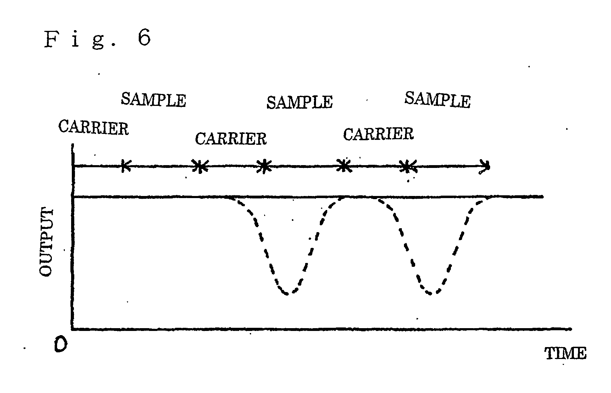

In FIA2, the output signals obtained in the first and the second detecting sites are as shown in Fig 6. In Fig. 6, the solid line is obtained for the liquid sample in the first detecting site, and the dotted line is obtained for the reaction product in the second detecting site. That is, since the liquid sample and the carrier alternately pass through the first flow cell 15 and the second flow cell 17, the output signals for the liquid sample fraction and the output signals for the carrier fraction alternately appear in the first and the second detecting sites. Therefore, the concentration of the objective component to be analyzed in the liquid sample is obtained as a difference between the output signals for each fraction of the liquid sample, taken in the first detecting site and the maximum of the changed output signals for each of the reaction product fractions corresponding to each of the liquid sample fractions, taken in the second detecting site.

In FIA1 and FIA2, a spectrophotometer is used in the detecting portion. However, a detector of an electrochemical type may be substituted for the spectrophotometer in this invention.

Since the flow injection analyzer of this invention has flow cells and light-receiving elements for the physical amounts of the liquid sample itself as well as the reaction product of the liquid sample, the measuring errors based on the impurities contained in the liquid sample itself and detectable by the detector, are canceled out, and thus the exact date can be obtained.

The flow injection analyzer of this invention has a means for regulating the light amount of the light source to be constant, and hence the measuring errors based on the change in the light amount of the light source can be canceled out.

The flow injection analyzer of this invention is provided with the computer, which makes it possible to automatically calculate the concentration of the objective component to be analyzed in the liquid sample, from the output signals taken in the detecting portion.

The flow injection analysis method of this invention can obtain the exact concentration of the objective component to be analyzed in the liquid sample, which is free of any measuring errors.

**Claims**

1. A flow injection analysis method, which comprises the steps of:

   - feeding a liquid sample that is not mixed with a detecting reagent to a first flow cell (15),
   - measuring light from a light source (14) passing through the liquid sample contained in the first flow cell (15) with a first light receiving element (16),
   - adding a detecting reagent to the liquid sample provided from the first flow cell (15) and feeding the resulting liquid to a second flow cell (17),
   - measuring light from the light source (14) passing through the liquid contained in the second flow cell (17) with a second light receiving element (18), and
   - analyzing the concentration of an objective component to be analyzed in the liquid sample based on the measurements of the first and second light receiving elements (16, 18),
   - wherein light from the light source (14) passing through a light amount-regulating cell (19) is measured with a third light receiving element (20), and the light source (14) is regulated in such a manner that the light amount measured by the third light receiving element (20) is constant.

2. Use of a flow injection analyzer for carrying out the method according to claim 1, the analyzer comprises:

   - a first flow cell (15), through which a liquid sample is allowed to pass,
   - a first light receiving element (16) for measuring the amount of light leaving a light source (14) and passing through the liquid contained in the first flow cell (15),

- reagent-introducing portions (7) arranged between the first flow cell (15) and a second flow cell (17) for adding a detecting reagent to the liquid sample, and means for feeding the resulting liquid to,
- the second flow cell (17), through which the liquid obtained by adding the detecting reagent to the liquid sample in the reagent-introducing portions (7) is allowed to pass,
- a second light receiving element (18) for measuring the amount of light leaving the light source (14) and passing through the liquid contained in the second flow cell (17).
- a third light receiving element (20) for measuring the amount of light from the light source (14) provided for the first and second light receiving elements (16, 18) and passing through a light amount-regulating cell (19), and
- a light amount-regulating portion for regulating the light source (14) in such a manner that the light amount measured by the third light receiving element (20) is constant.

3. The use of a flow injection analyzer according to claim 2, wherein the analyzer is provided with a computer for calculating the concentration of an objective component to be analyzed from the measurements obtained by the first light receiving element (16) and the second light receiving element (18).

**Patentansprüche**

1. Fließinjektionsanalyseverfahren, dass folgende Schritte umfasst:

- Zuführen einer Flüssigkeitsprobe, die nicht mit einem Nachweisreagenz gemischt ist, zu einer ersten Fließzelle (15),
- Messen von Licht von einer Lichtquelle (14), dass durch die in der ersten Fließzelle (15) enthaltene Flüssigkeitsprobe hindurchgeht, mit einem ersten Lichtempfangselement, (16),
- Hinzufügen eines Nachweisreagenz zu der von der ersten Fließzelle (15) gelieferten Flüssigkeitsprobe und Zuführen der resultierenden Flüssigkeit zu einer zweiten Fließzelle (17),
- Messen von Licht von der Lichtquelle (14), dass durch die in der zweiten Fließzelle enthaltenen Flüssigkeit hindurchgeht, mit einem zweiten Lichtempfangselement (18), und
- Analysieren der Konzentration einer zu analysierenden Zielkomponente in der Flüssigkeitsprobe auf der Grundlage der Messungen der ersten und zweiten Lichtempfangselemente (16, 18),

wobei Licht von der Lichtquelle (14), dass durch eine Lichtmenge-Regelzelle (19) hindurchgeht, mit einem dritten Lichtempfangselement (20) gemessen wird, und die Lichtquelle (14) so geregelt wird, dass die durch das dritte Lichtempfangselement (20) gemessene Lichtmenge konstant ist.

2. Verwendung eines Fließinjektionsanalysegeräts für die Durchführung des Verfahrens nach Anspruch 1, dass Analysegerät umfasst:

- eine erste Fließzelle (15), durch die eine Flüssigkeitsprobe passieren kann,
- ein erstes Lichtempfangselement (16) zum Messen der Lichtmenge, die eine Lichtquelle (14) verläßt und durch die in der ersten Fließzelle (15) enthaltene Flüssigkeit hindurchgeht,
- Reagenzeinführabschnitte (7), die zwischen der ersten Fließzelle (15) und einer zweiten Fließzelle (17) zum Hinzufügen eines Nachweisreagenz zu der Flüssigkeitsprobe angeordnet sind, und
- Mittel zum Zuführen der resultierenden Flüssigkeit zu der zweiten Fließzelle (17), durch welche die durch Hinzufügen des Nachweisreagenz zu der Flüssigkeitsprobe in den Reagenzzuführabschnitten (7) erhaltene Probe passieren kann,
- ein zweites Lichtempfangselement (18) zum Messen der Lichtmenge, die die Lichtquelle (14) verläßt und durch die in der zweiten Fließzelle enthaltene Flüssigkeit hindurchgeht,
- ein drittes Lichtempfangselement (20) zum Messen der Lichtmenge von der Lichtquelle (14), die für das erste und das zweite Lichtempfangselement (16) vorgesehen ist und durch eine Lichtmenge-Regelzelle (19) hindurchgeht, und
- einem Lichtmenge-Regelabschnitt zum Regeln der Lichtquelle (14) in solcher Weise dass die durch das dritte Lichtempfangselement gemessene Lichtmenge konstant ist.

3. Verwendung eines Fließinjektionsanalysegeräts nach Anspruch 2, wobei das Analysegerät mit einem Computer zum Berechnen der Konzentration einer zu analysierenden Zielkomponente aus den mittels des ersten Lichtempfangselements (16) und des zweiten Lichtempfangselements (18) erhaltenen Messungen versehen ist.

**Revendications**

1. Une méthode d'analyse par injection de flux, qui comprend les étapes consistant à :

- envoyer un échantillon de liquide qui n'est pas mélangé avec un réactif de détection vers une première cellule de flux (15),
- mesurer la lumière issue d'une source de lumière (14) traversant l'échantillon de liquide contenu dans la première cellule de flux (15) au moyen d'un premier élément récepteur (16) de lumière,
- ajouter un réactif de détection à l'échantillon de liquide fourni par la première cellule de flux (15) et envoyer le liquide résultant vers une seconde cellule de flux (17),
- mesurer la lumière issue de la source de lumière (14) traversant le liquide contenu dans la seconde cellule de flux (17) au moyen d'un second élément récepteur de lumière (18), et
- analyser la concentration d'un composant objectif destiné à être analysé dans l'échantillon de liquide sur la base des mesures effectuées par le premier et le second élément de réception de lumière (16, 18),
- dans laquelle la lumière issue de la source de lumière (14) traversant une cellule de régulation de la quantité de lumière (19) est mesurée au moyen d'un troisième élément de réception de lumière (20) et la source de lumière (14) est réglée d'une manière telle que la quantité de lumière mesurée par le troisième élément de réception de lumière (20) soit constante.

2. Utilisation d'un analyseur d'injection de flux pour mettre en oeuvre la méthode selon la revendication 1, l'analyseur comprenant :

- une première cellule de flux (15) à travers laquelle on fait passer un échantillon de liquide,
- un premier élément récepteur de lumière (16) pour mesurer la quantité de lumière émise par une source de lumière (14) et traversant le liquide contenu dans la première cellule de flux (15),
- des parties (7) d'introduction de réactif agencées entre la première cellule de flux (15) et une seconde cellule de flux (17) pour ajouter un réactif de détection dans l'échantillon de liquide, et des moyens pour envoyer le liquide résultant vers
- la seconde cellule de flux (17) à travers laquelle on fait passer le liquide obtenu par l'addition du réactif de détection à l'échantillon de liquide dans les parties d'introduction de réactif (7),
- un second élément de réception de lumière (18) pour mesurer la quantité de lumière quittant la source de lumière (14) et traversant le liquide contenu dans la seconde cellule de flux (17),

- un troisième élément de réception de lumière (20) pour mesurer la quantité de lumière issue de la source de lumière (14) fournie pour les premier et second éléments de réception de lumière (16, 18) et traversant une cellule de régulation de quantité de lumière (19), et
- une partie de régulation de quantité de lumière pour régler la source de lumière (14) d'une manière telle que la quantité de lumière mesurée par le troisième élément de réception de lumière (20) soit constante.

3. Utilisation d'un analyseur d'injection de flux selon la revendication 2, dans laquelle l'analyseur est pourvu d'un ordinateur pour calculer la concentration d'un composant objectif destiné à être analysé à partir des mesures obtenues par le premier élément de réception de lumière (16) et le second élément de réception de lumière (18).

Fig. 1

Fig. 2

Fig. 3

Fig. 4

Fig. 5

Ｆｉｇ．６